# EUROPÄISCHE PATENTANMELDUNG

(11) **EP 1 289 201 A1**
(43) Veröffentlichungstag der Anmeldung: **05.03.2003**
(21) Anmeldenummer: 01121192.7
(22) Anmeldetag: 04.09.2001
(51) Int. Cl.: H04L 12/56

(54) **Verfahren zum Routen von Verbindungen in einem funkgestützten Ad-hoc-Netz und Netzstation zum Durchführen eines solchen Verfahrens**

(71) Anmelder: SIEMENS AKTIENGESELLSCHAFT, 80333 München (DE)
(72) Erfinder: Mitjana, Enric, 81369 München (DE)

(57) **Zusammenfassung**

Die Erfindung bezieht sich auf ein Verfahren zum Bestimmen und Einrichten einer Route zwischen einer anfordernden ersten Netzstation (N1) und einer erwidernden letzten Netzstation (N9) in einem Ad-hoc-Netz mit einer Vielzahl von Netzstationen (N1 - N9), wobei die anfordernde erste Netzstation (N1) eine entsprechende Anforderungsinformation (SA) zu benachbarten Netzstationen (N2 - N4) aussendet und die benachbarten Netzstationen (N2 - N4) diese Information weiterleiten.

Um ein effizientes Routen ohne Kenntnis der Netztopologie über die direkt benachbarten Netzstationen zu ermöglichen, wird vorgeschlagen, das Routing von Netzstation zu Netzstation durchzuführen, wobei jede Netzstation (N1 - N9) die Information als eigene Information (SA) an weitere ihr benachbarte Netzstationen weitersendet und diesbezügliche Daten (R-ID, S-ID, N-ID, QoS, Sendezeit, No.-Hops) der empfangenen und der weitergeleiteten Information (SA) für später eintreffende Informationen oder Datenpakete abspeichert.

## Beschreibung

Verfahren zum Routen von Verbindungen in einem funkgestützten Ad-hoc-Netz und Netzstation zum Durchführen eines solchen Verfahrens

Die Erfindung bezieht sich auf ein Verfahren zum Routen von Verbindungen in einem Ad-hoc-Netz mit den oberbegrifflichen Merkmalen des Patentanspruchs 1 sowie eine Netzstation zum Durchführen eines solchen Verfahrens.

Bei derzeit in der Entwicklung befindlichen Ad-hoc-Netzen ist eine Vielzahl von Netzstationen in der Lage, eigenständig ohne eine vermittelnde zentrale Netzeinrichtung eine Funkverbindung zu anderen derartigen Netzstationen aufzubauen. Dabei soll der Aufbau einer Funkverbindung zwischen jeweils zwei derartigen Netzstationen automatisch erfolgen. Ad-hoc-Netze für kleine lokale Bereiche, z. B. Bürogebäude, sollen in der Lage sein, eine Kommunikation zwischen einer geringen Anzahl von derartigen Netzstationen zu ermöglichen, während gemäß anderer Konzeptionen auch Ad-hoc-Netze in Entwicklung sind, bei denen eine große Vielzahl von Netzstationen über einen großen Raum verteilt miteinander kommunizieren können soll. Bei einem drahtlosen bzw. funkgestützten Ad-hoc-Netz handelt es sich um eine Art eines selbst-organisierenden Netzes, insbesondere eines lokalen Funknetzes (WLAN: Wireless Local Area Network). Ein besonderer Vorteil liegt in der großen Mobilität, durch die sich die Topologie des Netzes beliebig ändern kann. Dies bedingt jedoch auch, dass zu bestimmten Zeitpunkten an bestimmten Orten eine besonders gute Verbindung zu einer Vielzahl anderer Netzstationen bestehen kann, während am gleichen Ort zu anderen Zeitpunkten unter Umständen überhaupt keine Verbindung zu einer anderen Netzstation möglich ist. Ähnlich verhält es sich mit der Qualität von Funkverbindungen zwischen einzelnen Netzstationen, so dass auch Datenraten, zeitliche Verzögerungen (Delay), Dienstegüte (QoS: Quality of Service) usw. von Zeit zu Zeit und von Ort zu Ort stark schwanken können.

Bei Ad-Hoc-Netzen muss ein Netzpfad bzw. eine Route zwischen miteinander kommunizierenden Netzstationen aufgebaut werden, wobei die Route unter Umständen über eine Vielzahl dazwischen befindlicher Netzstationen führt, wobei derartige Übermittlungen über mehrere Stationen auch als "Hopping" bzw. "Hops" bezeichnet werden.

Einfache Ad-hoc-Kommunikationssysteme, wie beispielsweise das unter der Bezeichnung "Bluetooth" bekannte Kommunikationssystem, dienen als Ersatz für Kabelverbindungen, beispielsweise als Zugänge zu lokalen Netzen mittels eines Notebooks und dergleichen. Beim gegenseitigen "Entdecken" zweier derartiger Stationen werden Informationen über die möglichen Dienste zwischen den Terminals ausgetauscht. Dabei handelt es sich um Dienste, die sich über die Zeit nicht nennenswert ändern, beispielsweise Druckfunktionen oder Kopierfunktionen, um Daten von einem Notebook in einen Zentralspeicher eines Netzes zu kopieren. Funktionen zum Aufbau einer Route über mehrere Stationen liegen bei Bluetooth jedoch fern, da es sich um direkte Punkt-zu-Punkt-Verbindungen handelt. Bei Bluetooth wird eine Masterstation definiert, die einen Zugriff auf das Piconetz durch mobile Stationen steuert und aufbaut.

Erste Entwicklungen von Ad-hoc-Netzen stammen aus dem militärischen Bereich, um Daten auf beispielsweise einem Schlachtfeld zwischen entsprechend verteilten Netzstationen auszutauschen, und aus dem Bereich des Katastrophenschutzes, um nach Naturkatastrophen bei zerstörter Kommunikationsstruktur ein großflächiges Kommunikationsnetz aufbauen zu können. Dabei wird das Routing anhand GPS-bestimmter (GPS: Global Positioning System) geographischer Positionen der einzelnen Netzstationen bestimmt und optimiert. Diese Vorgehensweise ist in Innenraumumgebungen jedoch nicht immer möglich, da sich keine derart genaue Positionierung ermitteln lässt. Bei kleinen Netzen ist die Positionierung nicht genau genug, z.B. bei 5 Terminals in einem 50qm-Raum mit GPS-Genauigkeiten um die 100m.

Hinsichtlich des Bestimmens von Routen zwischen zwei Netzstationen sind Beispiele aus "Towards Mobile Ad-hoc-WANs: Terminodes", IEEE WCNC'2000 Conference, Chicago, September 2000" bekannt. Unterschieden wird dabei zwischen einer lokalen Sicht und einer entfernten Sicht einer Netzstation. Bei der lokalen Betrachtungsweise versucht eine Netzstation sich ein räumliches Bild der Verteilung verschiedener Netzstationen im näheren Umfeld zu machen. Dazu werden eindeutige Endsystem-Identifizierungsnummern (EUI: End-System Unique Identifier) der Netzstationen in dem Bereich der sogenannten Nachbarschaft ermittelt, wobei unter Netzstationen in der Nachbarschaft bzw. Nachbarn Netzstationen zu verstehen sind, die mit einigen wenigen Sprüngen bzw. Hops zu erreichen sind. Weiterhin ist der Pfad bzw. die Route zu solchen Nachbarn sowie deren Lage zu ermitteln und abzuspeichern. Bei Bedarf versuchen die Netzstationen eine Fernsicht durch das Ermitteln von Informationen von nicht benachbarten Netzstationen aufzubauen. Die Fernsicht ist dabei z. B. auf Basis von verankerten geodätischen Punkten aufgebaut, wobei zu entfernten Netzstationen bei Kenntnis von deren Richtung, der kürzeste geodätische Weg gesucht und berechnet wird. Befinden sich auf diesem geodätisch kürzesten Weg keine Netzstationen mit der Möglichkeit, die Daten oder Informationen weiter zu vermitteln, wird ein Weg innerhalb eines möglichst geringen Winkels in der Zielrichtung gesucht, in dem sich Netzstationen mit Weitervermittlungsmöglichkeit befinden. Bei dem Vermitteln einer Route auf diese Art und Weise wird ein Routenvektor aus einer Liste von Ankerpunkten und/oder Netzstations-Identifizierungsnummern aufgebaut, wobei diese Liste für das spätere Versenden von Nutzdaten als Kopfabschnittsinformation (Header Information) zum Leiten der Daten mitgesendet wird.

Mit Blick auf den Stand der Technik kann somit zwischen zwei Arten von Routingprotokollen, sogenannten proactiven und reactiven Protokollen unterschieden werden. Bei proactiven Protokollen wird versucht, eine Route zu entdecken, wobei die entdeckten Routen ständig auf deren Beständigkeit überprüft werden und zwar unabhängig davon, ob die Routen benutzt werden oder nicht. Beispiele dazu sind in bestehenden andersartigen Kommunikationssystemen der traditionell bekannte Verbindungsstatus (Link Status) und Abstandsvektor-Protokolle (Distance Vektor Protocols). Die reactiven Protokolle bauen hingegen nur dann eine Route auf, wenn dafür Bedarf besteht. Beispiele dazu sind das dynamische Routenbilden von der Quell-Netzstation aus (DSR: Dynamic Source Routing) und das Abstandsvektorrouten auf Anforderung (AODV: Ad-hoc On demand Distance Vektor Routing). Letzteres hat den Vorteil einer geringeren Signalisierungslast. Nachteilhaft ist bei beispielsweise dem DSR, dass im Fall einer angeforderten Verbindungsinitiierung die anfordernde Quell-Netzstation zuerst eine Routensuche durchführen muss. Dieser Aufbau nimmt dabei nur eine geringe Zeit in Anspruch. Nach dem Auffinden einer Route werden alle Nutzpakete über die vordefinierte Route gesendet, wobei die einzelnen Datenpakete anhand der Kopfabschnittsinformationen gezwungen werden, die auf dieser Route ermittelten Netzstationen zu benutzen. Eine Änderung in der Verbindungsschicht (Link layer), beispielsweise durch die Mobilität der Netzstationen, kann dazu führen, dass eine der Netzstationen sich nicht mehr in der geeigneten Lage befindet, die zum Zeitpunkt des Verbindungsaufbaus vorlag. Unterbrechungen in der Route müssen zuerst zu der Quell-Netzstation zurückübermittelt werden, damit diese für die Übertragung weiterer Datenpakete eine neue Route ermittelt.

Die Aufgabe der Erfindung besteht darin, ein Verfahren zum Routen von Verbindungen in einem Ad-Hoc-Netz vorzuschlagen.

Diese Aufgabe wird durch ein Verfahren zum Routen von Verbindungen in einem Ad-Hoc-Netz gemäß den Merkmalen des Patentanspruchs 1 bzw. eine Netzstation mit einem Speicher und einer Funktionalität zum Durchführen eines solchen Verfahrens gemäß den Merkmalen des Patentanspruchs 9 gelöst.

Vorteilhafte Ausgestaltungen sind Gegenstand von abhängigen Ansprüchen.

Das Abspeichern und Verwalten von Verbindungsanfragen in jeder einzelnen Netzstation unter Berücksichtigung der Verbindungen von und zu direkten Nachbarstationen ermöglicht ein einfaches und effektives Routing ohne Routinglisten in zu übertragenden Datenpaketen mitführen zu müssen. Insbesondere müssen beim Ausfall einer Zwischenstation nicht komplette Routen ermittelt und zwischen den Endstationen ausgetauscht werden. Im Idealfall wird nur in dem betroffenen Routenabschnitt eine Suche nach einer neuen Zwischenstation durchgeführt. In zweckmäßiger Weise wird bei einer Übertragung der Funktionalitätsinformation über zwischengeschaltete weitere Netzstationen jeweils zusätzlich von den zwischengeschalteten Netzstationen ein Zählwert hochgezählt, so dass die empfangende Netzstation anhand des Zählwertes erkennen kann, wie viele Sprünge bzw. Hops die Netzstation entfernt ist, welche den besonderen Dienst oder die besondere Funktionalität anbietet. Dies ermöglicht einerseits bei mehreren möglichen Routen die Auswahl einer Route mit möglichst wenigen Sprüngen und ermöglicht andererseits auch eine Abschätzung über die Sicherheit der Verbindung über einen längeren Zeitraum sowie die Qualität der Verbindung.

Das Aussenden von Mitteilungen bzw. Informationen über die besondere Funktionalität einer Netzstation versorgt umliegende Netzstationen vorteilhafterweise mit den erforderlichen Daten, um einerseits zu erkennen, dass eine bestimmte Funktionalität einer fremden Netzstation nutzbar ist und andererseits, um welche Netzstation und/oder Dienste es sich dabei handelt.

Die Weiterleitung von Informationen, die in einer Netzstation vorliegen, an eine direkt benachbarte Netzstation, die diese Daten bzw. Informationen wiederum aufnimmt und als eigene Daten gegenüber weiteren zu dieser direkt benachbarten Netzstationen weitergibt, ermöglicht ein effektives Routing, welches vorteilhafte Aspekte sowohl einer herkömmlichen kurzsichtigen als auch einer herkömmlichen weitsichtigen Routingmethode aufweist. Durch einen periodischen Austausch von Informationen mit Nachbar-Netzstationen weiß jede der Netzstationen, welche Funktionalität die direkt benachbarte Netzstation selber aufweist oder vermitteln kann und welche von direkten Nachbarstationen angefragten Verbindungen an welche direkten Nachbarstationen weitergeleitet wurden. In den einzelnen Netzstationen muss lediglich die Information von angebotenen Funktionen, Diensten und Verbindungen von sich selber und direkt benachbarten Netzstationen abgespeichert werden. Bei der Weitervermittlung oder dem weiteren Anbieten von Verbindungen, Funktionen und Diensten an dritte direkt benachbarte Netzstationen werden dazu zweckmäßigerweise Identifizierungsinformationen einerseits mit den Routingdaten übertragen und andererseits in der entsprechenden Netzstation abgespeichert werden. Dies ermöglicht ein Routing ohne einerseits eine regionale Kenntnis der weiteren Nachbarschaft und andererseits ein Routing nach dem herkömmlichen Routingverfahren für weit entfernte Netzstationen mit jeweils starren Routen und aufwendigen Kopfabschnittinformationen mit den gesamten erforderlichen Daten der Route.

Jede Netzstation routet bzw. leitet eigene oder hereinkommende Datenpakete entsprechend ihrer eigenen aktuellsten Kenntnisse weiter und kann beim Ausfall einer erforderlichen Nachbarstation eigenständig eine neue Route suchen. Die Quell-Netzstation muss keine detaillierte Route in jeden einzelnen Paket-Kopfabschnitt eintragen, was wiederum zu einer geringeren Systembelastung führt. Insbesondere wird das Verhältnis von Informationslast zu Nutzlast in den Datenpaketen deutlich verbessert. Unter direkt benachbarter Netzstation wird vorstehend eine Netzstation verstanden, die mit einer direkten Verbindung ohne Sprünge erreichbar ist.

Ein Ausführungsbeispiel wird nachfolgend anhand der Zeichnung näher erläutert. Es zeigen:
- Fig. 1: eine Anordnung von Ad-hoc-Netzstationen mit dazwischen befindlichen Verbindungen und
- Fig. 2: Informationen in Signalisierungsnachrichten und Ausschnitte des Datenspeicherbereiches einer bevorzugten Netzstation zum Abspeichern von Routinginformationen.

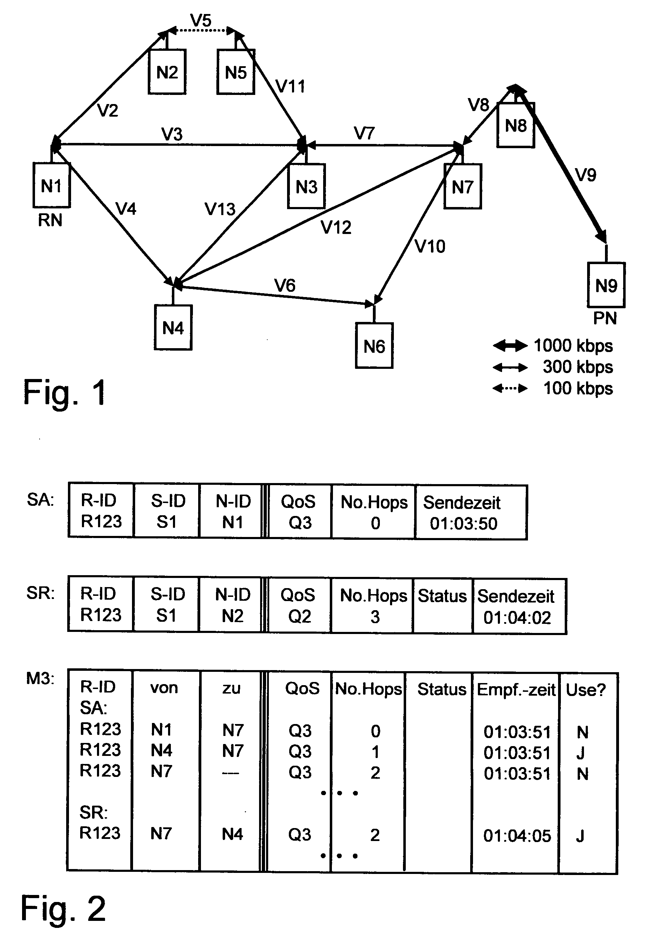

Wie aus Fig. 1 ersichtlich, besteht ein beispielhaftes Ad-hoc-Netz aus zwei oder mehr miteinander kommunizierenden Netzstationen N1 - N9. Wie bei Ad-hoc-Netzen üblich, können die Netzstationen N1 - N9 eigenständig Verbindungen aufbauen, ohne dass dazu eine zentrale Netzeinrichtung erforderlich ist. Beim dargestellten Ausführungsbeispiel soll von einer ersten Netzstation N1 ausgehend eine Verbindung V3, V7, V8, V9 zu einer entfernten Netzstation N9 aufgebaut werden.

Beim dargestellten Ausführungsbeispiel besteht die Möglichkeit des Aufbaus einer Verbindung bzw. Route über eine Vielzahl verschiedener möglicher Wege. Von der Netzstation N1 aus sind Kommunikationsverbindungen V2 zu einer Netzstation N2, V3 zu einer Netzstation N3 und V4 zu einer Netzstation N4 aufgebaut oder aufbaubar. Von der Netzstation N2 besteht eine weitere Verbindung V5 zu einer Netzstation N5, von der wiederum eine Verbindung V11 bzw. Verbindungsmöglichkeit zu der Netzstation N3 besteht. Von der Netzstation N3 aus besteht eine Kommunikationsverbindung V7 zu einer Netzstation N7 sowie eine Kommunikationsverbindung V13 zu der Netzstation N4. Von der Netzstation N4 besteht neben den Kommunikationsverbindungen bzw. Verbindungsmöglichkeiten V4, V13 zu den Netzstationen N1, N3 weitere Kommunikationsverbindungen V12 und V6 bzw. Verbindungsmöglichkeiten zu Netzstationen N7 und N6.

Eine weitere Kommunikationsverbindung V10 bzw. Verbindungsmöglichkeit besteht zwischen den Netzstationen N6 und N7. Von der Netzstation N7 führt neben den aufgeführten Kommunikationsverbindungen V7, V12, V10 eine weitere Kommunikationsverbindung V8 zu einer Netzstation N8, die wiederum über eine Kommunikationsverbindung V9 mit der Netzstation N9 kommuniziert. Beim vorliegenden Ausführungsbeispiel sollen die Kommunikationsverbindungen jeweils für verschiedene maximale Übertragungsraten geeignet sein. Die Kommunikationsverbindung V5 soll lediglich eine Datenrate von 100 kbps und die Kommunikationsverbindung V9 soll eine maximale Datenrate von 1.000 kbps ermöglichen. Die weiteren Kommunikationsverbindungen V2 - V4, V6 - V8, V10 - V13 sollen maximale Datenraten von 300 kbps zulassen.

Die einzelnen Netzstationen N1 - N9 weisen neben Sende- und Empfangseinrichtungen und Steuereinrichtungen zum Betreiben der Netzstationen und Kommunikationsverbindungen insbesondere auch einen Speicher zum Speichern von betriebsrelevanten Parametern auf. Bei dem nachfolgend beschriebenen Verfahren werden in diesem oder einem weiteren Speicher zusätzlich für das Routing relevante Daten abgespeichert. Das Routing wird nachfolgend jeweils von den einzelnen Netzstationen N1 - N9 selber durchgeführt, wobei die einzelnen Netzstationen vorzugsweise nur Kenntnis von direkt benachbarten Netzstationen haben. Unter einer direkt benachbarten Netzstation ist dabei eine Netzstation zu verstehen, die ohne Relaisstationen bzw. Zwischenstationen, d.h. ohne Sprünge bzw. Hops/Hopping mit einer einzigen direkten Verbindung erreichbar ist. Für eine Kommunikation mit Netzstationen, die für das nachfolgend beschriebene Routingverfahren nicht geeignet sind, kann natürlich parallel oder zusätzlich auch ein Routingverfahren herkömmlicher Art und Weise verwendet werden.

Wie auch bei für sich bekannten Routingverfahren wird in einem ersten Schritt eine geeignete Route aufgebaut, wobei bestimmte Leistungsbeschränkungen bzw. Leistungs-Minimalanforderungen direkt vorgegeben und berücksichtigt werden können. Dabei muss ein Pfad bzw. eine Route von der eine Kommunikation anfordernden Netzstation N1 zu der gewünschten Kommunikations-Netzstation N9 aufgebaut werden. Dabei oder in einem weiteren Schritt werden die Bedingungen untersucht, unter denen eine Verbindung aufgebaut werden kann. Dies ist beispielsweise eine mindest erforderliche Dienstegüte QoS (Quality of Service), um die Paketübertragung mit der erforderlichen Dienstegüte sicherzustellen. Letztendlich müssen die Ressourcen längs des Pfades reserviert werden, um den Verbindungsaufbau zu ermöglichen, wobei dieses Erfordernis bei dem hier beschriebenen Ausführungsbeispiel nicht zwingend erforderlich ist, da die Route im Fall des Ausfalls einer einzelnen Zwischen- bzw. Relaisstation durch die benachbarten Stationen auf der Route wieder neu eingerichtet werden kann. Bei den Reservierungen könnten vorzugsweise noch Prioritäten definiert werden, die dann z.B. zu Beschränkungen von bestimmten Durchsätzen führen.

Mit Blick auf die Rechner- und/oder Leistungsbeschränkungen einzelner Stationen, die vorzugsweise von deren Benutzern vorgegeben werden können, sollte das Routing mit Blick auf die Dienstegüte für die einzelnen Netzstationen N1 - N9 bzw. Netzknoten so einfach wie möglich ausgeführt werden. Wie bereits angeführt, müssen die einzelnen Netzstationen N1 - N9 zum Durchführen des nachfolgend beschriebenen Verfahrens keine ausführliche Kenntnis über die Netztopologie, d.h. über Netzstationen N5, N6 - N9 haben, die nicht direkt benachbart sind. Dies bedeutet im bevorzugten Ausführungsbeispiel insbesondere auch, dass beim Hinzukommen oder Wegfallen einer Netzstation nur die direkt benachbarten Netzstationen mit Blick auf die Netztopologieänderung informiert werden. Anstelle einer aktiven Information von der hinzukommenden oder sich entfernenden Netzstation können die benachbarten Netzstationen bei sich entfernenden Netzstationen auch selber feststellen, dass die andere Netzstation nicht mehr da ist, da diese auf Anforderungen nicht mehr reagiert, z.B. wegen ihrem Ausfall oder fehlender Bereitschaft weiter als Relaisstation benutzt zu werden. Insbesondere ist es auch nicht erforderlich, in derartigen mobilen Umgebungen eine Positionsbestimmung über GPS (Global Positioning System) durchzuführen.

Beim vorliegenden Ausführungsbeispiel soll die erste Netzstation N1 für ihren Benutzer eine bestimmte Kommunikationsverbindung oder das Bereitstellen eines bestimmten Dienstes oder einer Funktionalität ermöglichen. Dazu sendet die erste Netzstation N1 eine Dienste- oder Verbindungsanforderungs-Nachricht SA über einen Kommunikationskanal, der von einer oder mehreren benachbarten Netzstationen N2, N3, N4 überwacht wird. Der Kommunikationskanal kann dabei eine bestehende Kommunikationsverbindung V2 - V4 sein, kann aber auch ein allgemeiner Nachrichtenkanal sein, wobei in diesem Fall die anfordernde Netzstation N1 bzw. RN (Requesting Node) keine Kenntnis über die anderen Netzstationen N2 - N4 haben muss, prinzipiell nicht einmal Kenntnis haben müsste, dass sie selber Teil eines Netzes ist.

Eine solche Verbindungsanforderungs-Nachricht SA kann eine Vielzahl von Informationen tragen. In bevorzugter Ausführungsform ist sie jedoch möglichst kurz gehalten, wobei sie zweckmäßiger Weise einige Grundinformationen enthalten sollte, die in Fig. 2 durch die ersten drei Felder der entsprechenden Blockdarstellung repräsentiert werden. Zu der Verbindungsanforderungs-Nachricht SA gehört insbesondere eine Anforderungs-Identifizierungsnummer R-ID, beim vorliegenden Ausführungsbeispiel die Anforderungs-Identifizierungsnummer R123, eine Dienste- bzw. Verbindungs-Identifizierungsnummer S-ID zur Kennzeichnung der angeforderten Verbindungs- oder Diensteart und eine Knoten- bzw. Netzstations-Identifizierungsnummer N-ID. Weitere Informationen können beispielsweise die angeforderte mindeste Dienstegüte QoS und die Sendezeit betreffen.

Die Anforderungs-Identifizierungsnummer R-ID sollte in dem Ad-hoc-Netz eine einzigartige und nur einmalig vergebene Nummer bzw. Zeichenfolge sein. Da dies schwierig zu organisieren sein kann, kann es sich um eine Zufallszahl in einem ausreichend großen Zahlenraum handeln, die einerseits die maximal erwartete Anzahl von Knoten und möglichen Verbindungen in dem Ad-hoc-Netz berücksichtigt und andererseits auch groß genug ist, um einen ausreichend großen Zufallszahlenraum bereit zu stellen, in dem die zufällige doppelte Vergabe innerhalb einer gewissen Zeit unwahrscheinlich ist. Diese Anforderungs-Identifizierungsnummer R-ID dient zum eindeutigen Identifizieren der Verbindungsanforderung SA für die gesamte Lebensdauer dieser Verbindungsanforderung in dem Netz.

Die Dienste- bzw. Verbindungs-Identifizierungsnummer S-ID stellt das Ziel bzw. die Ziel-Netzstation N9 dar, die den gewünschten Dienst oder den gewünschten Gesprächspartner bieten kann (PN: Providing Node). Bei dem Ziel kann es sich einerseits um eine Netzstation handeln, die einen bestimmten Dienst oder auch eine Gatewayfunktion zu einem anderen Kommunikationssystem zur Verfügung stellen kann, so dass eine Suche nicht nur nach einer bestimmten Gerätenummer sondern auch nach einem bestimmten Dienstemerkmal innerhalb des Ad-hoc-Netzes durchgeführt werden kann. Das Ziel kann aber auch ein bestimmter Gesprächspartner oder Kommunikationspartner sein, der eine eindeutig bestimmbare Netzstation N9/PN betreibt. In diesem Fall kann es sich beispielsweise um die jeder Netzstation eindeutig und einzig zugewiesene Gerätenummer handeln. Die Dienste- bzw. Verbindungs-Identifizierungsnummer S-ID dient somit Nachbarstationen bzw. benachbarten Netzstationen N2 - N4, die eine Verbindungsanforderungs-Nachricht SA von der anfordernden Netzstation N1/RN erhalten, um festzustellen, ob sie den gewünschten Dienst anbieten können bzw. ob sie die für eine Kommunikationsverbindung angeforderte Netzstation N9 sind.

Die Knoten- bzw. Netzstations-Identifizierungsnummer N-ID ist so gewählt, dass andere Netzstationen N2 - N4 des Netzes bei ihrer Kenntnis und der Aufbaumöglichkeit einer direkten Kommunikationsverbindung über einen Peer-to-Peer-Kanal bzw. eine Punkt-zu-Punkt-Verbindung V2 - V4 mit dieser Netzstation N1 kommunizieren können. Die Kommunikationsverbindungen V2 - V4 sind somit vorzugsweise individuelle Kommunikationsverbindungen, so dass die Verwendung eines für alle Netzstationen N1 - N9 gemeinsamen Kanals vermieden werden kann. Letztendlich können die Netzstations-Identifizierungsnummern N-ID wahlweise oder nach einem Zufallsprinzip innerhalb des Ad-hoc-Netzes vergeben werden oder aber aus eindeutigen Geräteindentifizierungsnummern bestehen. Im Fall der freien Vergabe von Netzstations-Identifizierungsnummern N-ID reicht es beim hier beschriebenen Routingverfahren aus, dass jeweils diejenigen Netzstationen N1 - N3, die in der Lage sind, direkte Kommunikationsverbindungen V2 - V4 aufgrund der räumlichen Lage miteinander aufzubauen, zueinander verschiedene Netzstations-Identifizierungsnummern N-ID haben.

Die Übermittlung der erforderlichen Dienstegüte QoS dient dazu, Mindestanforderungen hinsichtlich zeitlichen Verzögerungen (Delay), Jitter, Bandbreite, zulässiger Wahrscheinlichkeit eines Paketverlustes, Kosten, Energieverbrauch etc. zu übermitteln, so dass für den Fall einer nicht ausreichenden Dienstegüte QoS ein angeforderter Verbindungsaufbau direkt abgelehnt werden kann.

Ein weiteres diesbezüglich informatives Kriterium ist die Anzahl der erforderlichen Sprünge bzw. Hops längs einer Route V3, V7, V8, V9. Die Anzahl der Sprünge No.Hops gibt dabei die Anzahl von Zwischen- bzw. Relaisstationen N3, N7, N8 an, die auf der Route zwischen der anfordernden und der bedienenden Netzstation N1 bzw. N9 liegen. Je größer die Anzahl der Sprünge ist, desto größer ist auch das Risiko eines Unterbrechens der Route durch das Abschalten oder Entfernen einer mobilen Netzstation aus dem Sendebereich der weiteren Routenmitglieder. Je größer die Anzahl der Sprünge ist, desto größer kann auch der Energieverbrauch für eine Übertragung mit Blick auf die Gesamtheit aller eingebundenen Netzstationen N1, N3, N7 - N9 sein, da jede weiterleitende Station genau so wie die beiden eigentlich kommunizierenden Netzstationen für ihre Tätigkeit Energie verbraucht. Dies gilt insbesondere dann, wenn Fehlerkorrekturverfahren verwendet werden.

Wenn die Dienste- bzw. Verbindungsanforderungs-Nachricht SA von einer Netzstation N9 empfangen wird, die den entsprechenden Dienst zur Verfügung stellen kann oder dem gewünschten Gesprächspartner zuzuordnen ist, sendet diese bereitstellende Netzstation N9 bzw. Zielstation PN eine Verbindungsanforderungs-Antwortnachricht SR an die anfordernde Netzstation N1/RN zurück. Sofern von der Ziel-Netzstation N9/PN lediglich konkrete Daten angefordert werden, die in der Verbindungsanforderungs-Nachricht ausreichend spezifiziert sind, so können auch direkt entsprechende Datenpakete zu der anfordernden Netzstation N1/RN zurückgesendet werden.

Solche Datenpakete bzw. insbesondere eine solche Verbindungsanforderungs-Antwortnachricht SR umfassen ebenfalls verschiedene Informationen, wobei in Fig. 2 wieder zwischen wichtigeren und weniger wichtigeren Informationen eine optische Trennung vorgenommen wurde. Die wichtigeren Informationen sind wiederum die Anforderungs-Identifizierungsnummer R-ID, die Dienste- bzw. Verbindungs-Identifizierungsnummer S-ID und die Knoten- bzw. Netzstations-Identifizierungsnummer N-ID. Die weniger wichtigen Informationen sind wiederum eine Information hinsichtlich der bereitstellbaren Dienstegüte QoS, die Anzahl der Sprünge No.-Hops, ein Status sowie die Sendezeit am Ort der weiterleitenden und/oder der Ziel-Netzstation N9.

Die Anforderungs-Identifizierungsnummer R-ID ist identisch mit der Anforderungs-Identifizierungsnummer R-ID, die in der Verbindungsanforderungs-Nachricht SA enthalten war. Die Dienste- bzw. Verbindungs-Identifizierungsnummer S-ID entspricht ebenfalls den ursprünglichen Daten und bestätigt, dass die bereitstellende bzw. Ziel-Netzstation N9 den angeforderten Dienst oder Kommunikationspartner bieten kann.

Das Feld für die Knoten- bzw. Netzstations-Identifizierungsnummer N-ID entspricht nunmehr der Nummer, die der Ziel-Netzstation N9 zugeordnet ist. Diese Netzstations-Identifizierungsnummer N-ID ermöglicht es der Netzstation N8, die direkt benachbart ist, eine direkte Kommunikationsverbindung V9 mit der Ziel-Netzstation N9 aufzubauen bzw. aufrecht zu halten. Die Information über die Dienstegüte QoS ist in der Regel eine Kopie des ursprünglichen Datensatzes, der von der anfordernden Netzstation N1 übermittelt wurde. Für den Fall, dass die Ziel-Netzstation N9 die angeforderte Dienstegüte QoS nicht anbieten kann, wird der Wert entsprechend herabgesetzt. Die anfordernde Netzstation N1 kann dann nach Erhalt des herabgestuften Dienstegütewertes entscheiden, ob die angebotene Dienstegüte QoS noch ausreicht, oder ob die Kommunikationsverbindung zu dieser Ziel-Netzstation N9 nicht aufgebaut werden soll.

Die Angabe der Anzahl erforderlicher Sprünge entspricht dem Wert, den die Ziel-Netzstation N9 in der Verbindungsanforderungs-Nachricht SA empfangen hat. Die anfordernde Netzstation N1 kann nach Erhalt des Zahlenwertes No.-Hops bestimmen, wie viele Sprünge erforderlich sind, und davon abhängig entscheiden, ob die Kommunikationsverbindung aufgebaut werden soll oder nicht. Dies ist insbesondere für Echtzeitdienste (Real Time Services) eine entscheidende Information, da von der Anzahl der Sprünge die Verbindungssicherheit und der Energieverbrauch sowie auch die zeitliche Verzögerung der Übermittlung von Daten direkt abhängen.

Das Feld für die Statusinformation kann in bevorzugter Ausführungsform vier Werte annehmen, beispielsweise "00", "01", "10" und "11". Dabei kann das Statusfeld beispielsweise für jeden der angeforderten Dienstegüteparameter einen der folgenden Werte annehmen. Die Zahl "00" kann für die generelle Unfähigkeit stehen, den angeforderten Dienst oder die angeforderte Verbindung bereitstellen zu können. Dieser Wert "00" kann somit dafür stehen, dass die angefragte Netzstation die erforderliche Dienstegüte QoS oder den Dienst als solchen nicht zur Verfügung stellen kann oder auch keine andere Netzstation in ihrer Nachbarschaft erreichen kann, die dies bieten könnte, wobei dann zusätzlich die angefragte Station als Zwischen- bzw. Relaisstation zugelassen und eingerichtet sein müsste. Die Verwendung dieses Statuswertes "00" ist prinzipiell nicht erforderlich, insbesondere dann nicht, wenn andere Pfade bzw. Routen zur Umgehung der entsprechenden Station möglich sind.

Der Statuswert "01" kann beispielsweise für die Möglichkeit einer Bereitstellung des angeforderten Dienstes oder der angeforderten Kommunikationsverbindung stehen, falls alle oder einzelne der übermittelten Anforderungen reduziert werden können. Beispielsweise könnte der Statuswert "01" übermittelt werden, um zu signalisieren, dass eine angeforderte Bandbreite nicht in dem angeforderten Maße verfügbar gemacht werden kann.

Der Statuswert "10" kann verwendet werden, um zu signalisieren, dass zwar prinzipiell der angeforderte Dienst oder die angeforderte Kommunikationsverbindung bereitstellbar wäre, dies jedoch nicht zum momentanen Zeitpunkt. Ursache könnte beispielsweise eine momentane Überbelastung der Station oder eine momentane zeitliche Beschränkung durch den Benutzer der Station sein. Für den Fall, dass die anfordernde Netzstation N1 einen Statuswert "10" erhält, kann sie sich einen entsprechenden Vermerk machen, um vorerst nach anderen Netzstationen mit der entsprechenden Fähigkeit zu suchen und für den Fall generell keiner möglichen Verbindung zu einem späteren Zeitpunkt einen erneuten Versuch zu starten.

Der Statuswert "11" könnte verwendet werden, um der anfordernden Netzstation N1 zu signalisieren, dass die Bereitstellung des Dienstes oder der angeforderten Kommunikationsverbindung möglich ist.

Die Angabe einer Sendezeit in der Verbindungsanforderungs-Nachricht SA und/oder der Verbindungsanforderungs-Antwortnachricht SR dient dazu, eine Lebenszeit für die Nachrichten festzulegen. Die Lebenszeit kann einerseits dadurch bestimmt werden, dass es sich um die tatsächlichen Sendezeiten handelt, von denen ab eine gewisse Gültigkeitsdauer anzunehmen ist, es kann sich aber auch um eine berechnete Sendezeit, d.h. eine tatsächliche Sendezeit zuzüglich einer Lebensdauer handeln, um somit eine Endlebensdauer anzugeben. Dies ist z.B. umsetzbar, indem ein Zählwert von der Sendestation initialisiert wird und von den Relaisstationen bei jedem Hop -1 addiert wird. Bei einem Zählwert von 0 wird das Paket nicht mehr weitergeleitet. Die Sendezeit dient dazu, entsprechende Registrierungen in den Speichern der einzelnen Netzstationen N1 - N9 freizugeben bzw. zu löschen.

Falls die Verbindungsanforderungs-Nachricht nach dem Aussenden durch die anfordernde Netzstation N1 nicht von der Ziel-Netzstation N9 empfangen wird, sondern von einer anderen, der anfordernden Netzstation N1 direkt benachbarten Netzstation N2 - N4, so wird die Verbindungsanforderungs-Nachricht von dieser empfangenden Netzstation N2 - N4 weiter verarbeitet. Sofern die empfangende Netzstation N2 - N4 in der Lage ist, Weiterleitungen für die angeforderten Dienste oder Kommunikationsverbindungen vorzunehmen, sendet die empfangende Netzstation N2 - N4 die Verbindungsanforderungs-Nachricht SA zu ihren direkt benachbarten Netzstationen N5 - N7 weiter. Dies kann wiederum über einen gemeinsam verwendeten Kanal oder einen direkten Kommunikationskanal durchgeführt werden. Die Inhalte der neuen Verbindungsanforderungs-Nachricht SA entsprechen im Idealfall denen der empfangenen Verbindungsanforderungs-Nachricht SA. Sofern ein Feld mit der Information über die Anzahl der Sprünge No.-Hops in der Verbindungsanforderungs-Nachricht enthalten ist, wird der darin eingetragene Zahlenwert um den Wert "1" erhöht. Für den Fall, dass die empfangene Verbindungsanforderungs-Nachricht SA keine derartige Angabe enthielt, wird ein solches Informationsfeld über die Anzahl der erforderlichen Sprünge No.-Hops an die weitergeleitete bzw. eigenständig versandte neue Verbindungsanforderungs-Nachricht SA angehängt oder in dieser eingesetzt.

Die weiterleitende Netzstation N2 - N8 speichert die Informationen der empfangenen und der weitergeleiteten bzw. ausgesandten Verbindungsanforderungs-Nachrichten SA in ihrem Netzstationsspeicher M3 ab. Ein Abbild des beispielhaften Speicherinhaltes ist am Beispiel der Netzstation N3 in Fig. 2 dargestellt. Der Speicher M3 enthält insbesondere die Informationen über die Anforderungs-Identifizierungsnummer R-ID, über die benachbarte Netzstation N1, N4, N5, N7, von der diese empfangen wurde und über die benachbarte Netzstation N7, N4, zu der diese Verbindungsanforderungs-Nachricht SA weitergeleitet wurde. Ferner werden in dem Speicher N3 in vorteilhafter Weise auch Angaben über die angeforderte bzw. mögliche Dienstegüte QoS, die Anzahl der erforderlichen Sprünge bzw. zurückgelegten Sprünge No.-Hops, den Status, die Empfangszeit oder die Sendezeit und über die durch die vorliegende Station vorgenommene bzw. vorzunehmende Verfahrensweise abgespeichert.

Netzstationen N3, die bereits eine Verbindungsanforderungs-Nachricht SA mit der gleichen Anforderungs-Identifizierungsnummer R-ID empfangen hatten, haben verschiedene Möglichkeiten zur Weiterbehandlung der empfangenen Verbindungsanforderungs-Nachricht SA. Zum Vermeiden von zirkularen bzw. Ring-Routing-Konstellationen werden diese später eintreffenden Verbindungsanforderungs-Nachrichten SA zweckmäßigerweise nicht mehr weitergeleitet. In der Regel kann angenommen werden, dass die später eintreffenden Verbindungsanforderungs-Nachrichten SA über einen weiteren Weg zu der empfangenden Netzstation N3 gelaufen sind, als die zuerst empfangene Verbindungsanforderungs-Nachricht SA. Auf den ersten Blick erscheinen somit die entsprechenden Routen weniger geeignet.

Sofern eine weiterleitende Netzstation N2 nicht in der Lage ist, eine bestimmte angeforderte Datenrate im Fall einer Weiterverbindung zu einer direkt benachbarten Netzstation N5 zu bieten, kann jedoch auch eine später eintreffende Verbindungsanforderungs-Nachricht SA mit einer entsprechend höher möglichen Dienstegüte für eine spätere Route verwendet werden. Da die ursprüngliche Verbindungsanforderungs-Nachricht SA von der empfangenden Netzstation N3 jedoch bereits weitergeleitet wurde, ist ein erneutes Weiterleiten nicht zweckmäßig.

Die Funktion des Weiterleitens einer Verbindungsanforderungs-Nachricht SA kann auch zu späteren Zeitpunkten durch eine beliebige Station auf einer bestehenden, eingerichteten Route V3, V7, V8, V9 erneut an ihre benachbarten Netzstationen ausgesendet werden, falls die ursprünglich eingerichtete Route durch den Ausfall einer der verwendeten Netzstationen unterbrochen werden sollte. Auf diese Art und Weise können die beiden Netzstationen, zwischen denen die Route unterbrochen wurde, eigenständig nach einer neuen Verbindung suchen.

Sofern im entsprechenden Speicher M3 noch ältere, alternative Routenmöglichkeiten hinterlegt sind, kann direkt eine Umleitung eintreffender Daten und Informationen vorgenommen werden. Ansonsten kann aber auch eine Suche nach einer neu ins Netz gekommenen und ebenfalls geeigneten weiteren Netzstation vorgenommen werden.

Der Ablauf des Aussendens und Weiterleitens von Verbindungsanforderungs-Nachrichten SA wird solange wiederholt, bis eine Ziel-Netzstation N9/PN in dem Ad-hoc-Netz gefunden wurde oder die Verbindungsanforderungs-Nachrichten SA anhand der ursprünglichen Sendezeit oder der Lebensdauerzeit als ungültig zu betrachten sind.

Auf die gleiche Art und Weise, in der Verbindungsanforderungs-Nachrichten SA von einer weiterleitenden bzw. Relais-Netzstation N2 - N8 empfangen und weitergeleitet, insbesondere überarbeitet weitergeleitet werden, werden auch die Verbindungsanforderungs-Antwortnachrichten SR behandelt.

Die jeweils weitergeleiteten Verbindungsanforderungs-Nachrichten SA bzw. Verbindungsanforderungs-Antwortnachrichten SR erhalten von den weiterleitenden Stationen neue Einträge in dem Feld der Netzstations-Identifizierungsnummer N-ID. In dieses Feld wird entsprechend die Netzstations-Nummer der Relaisstation eingetragen. Durch das Eintragen der jeweils aktuellen Netzstations-Identifizierungsnummer N-ID und das Abspeichern der empfangenen und versendeten Verbindungsanforderungs-Nachrichten SA und Verbindungsanforderungs-Antwortnachrichten SR ist es den Netzstationen N1 - N9 zu einem späteren Zeitpunkt möglich, weitere eintreffende Informations-, Signalisierungs- oder Datenpakete mit der gleichen Anforderungs-Identifizierungsnummer R-ID entsprechend weiterzuleiten bzw. zurückzuführen. Jede weiterleitende Netzstation N2 - N8 muss daher insbesondere nur Kenntnis der empfangenen und weitergeleiteten Daten und Informationen mit Blick auf ihre vorherige und ihre nächste Netzstation in der angeforderten Verbindungsfolge haben.

Falls die anfordernde Netzstation N1/RN innerhalb einer vorgebbaren Zeitspanne keine Verbindungsanforderungs-Antwortnachricht SR erhält, so kann sie daraus schließen, dass derzeit innerhalb des Ad-hoc-Netzes keine Verbindung bzw. Dienstebereitstellung möglich ist.

Falls die anfordernde Netzstation N1 oder eine weiterleitende Netzstation N2 - N8 eine Verbindungsanforderungs-Antwortnachricht SR über verschiedene Wege erhält, kann sie die Entscheidung mit Blick auf den Aufbau der Route für die Übertragung von Datenpaketen abhängig von den vordefinierten Beschränkungen oder Möglichkeiten treffen. Um die Redundanz und die Diversität zu erhöhen, ist es auch möglich, eine Punkt-zu-Mehrpunkt-Verbindung zu mehreren benachbarten Netzstationen aufzubauen. In der Regel werden jedoch zum schonen der Ressourcen einige oder bis auf eine alle von mehreren Möglichkeiten zum Aufbau einer Route nicht weiter berücksichtigt.

Falls die anfordernde Netzstation N1/RN eine Verbindungsanforderungs-Antwortnachricht empfängt, die ein wie vorstehend beschriebenes Statusfeld aufweist, hat sie verschiedene Möglichkeiten zu reagieren.

Falls das Statusfeld auf "00" gesetzt ist oder ein Ablaufen der maximalen Lebenszeit verzeichnet wird, schließt die anfordernde Netzstation N1 daraus, dass die Bereitstellung des Dienstes oder einer entsprechenden Kommunikationsverbindung zur Zeit generell nicht möglich ist.

Falls das Statusfeld auf "01" gesetzt ist, kann die anfordernde Netzstation N1/RN entscheiden, die Dienstegüteanforderungen herabzusetzen und den vorstehend beschriebenen Ablauf zum Feststellen einer geeigneten Route erneut beginnen. Dabei kann jedoch auch die erlangte Erkenntnis über die bisherigen möglichen Routen verwendet werden, um über diese gezielt eine Verbindungsanforderungs-Nachricht SA mit reduzierter Anforderung auszusenden.

Falls das Statusfeld auf "10" gesetzt ist, kann die anfordernde Netzstation N1/RN entscheiden, die Verbindungsanforderung für eine vorgebbare Zeit zurückzustellen und den ganzen Prozess zu einem späteren Zeitpunkt erneut zu beginnen. Auch dabei sind dann die bereits erlangten Informationen über theoretisch mögliche Routen zum Aussenden einer erneuten Verbindungsanforderungs-Nachricht SA ausnutzbar.

Falls das Statusfeld auf "11" gesetzt ist, setzt die anfordernde Netzstation N1/RN das Routingverfahren mit dem Aussenden einer Reservierungsnachricht über die Route fort, wodurch die einzelnen Relais-Netzstationen N2 - N8 informiert werden, die Weiterleitung entsprechend vorzunehmen und entsprechenden Ressourcen dafür freizuhalten. Diese Reservierungsinformation kann in den Speicher M3 der betroffenen weiterleitenden Relais-Netzstationen N3, N7, N8 entsprechend durch einen Eintrag in einem Benutzungsfeld Use? vorgenommen werden. Später in den weiterleitenden Netzstationen empfangene Datenpakete mit der Anforderungs-Identifizierungsnummer R-ID werden dann direkt von Netzstation zu Netzstation weitergeleitet.

Die vorstehend bestehende Verfahrensweise löst somit das Routingproblem, insbesondere mit Blick auf eine erforderliche Dienstegüte QoS, ohne dass die einzelnen Netzstationen N1 - N9 die genaue Topologie des Ad-hoc-Netzes in einer näheren Umgebung oder gar die Topologie des gesamten Ad-hoc-Netzes kennen müssen. Das Routingverfahren baut somit auf den Möglichkeiten und Fähigkeiten jeder einzelnen Netzstation N1 - N9 auf. Die Berechnung komplizierter Routen-Optimierungsalgorithmen kann vermieden werden. Insbesondere in sehr kleinräumigen Ad-hoc-Netzen, beispielsweise in Bürogebäuden ist dabei eine wiederholte Aktualisierung der Daten mit Blick auf die Signalisierungslast vernachlässigbar. In vorteilhafter Weise muss bei dem Hinzukommen oder Ausfallen einer einzigen Netzstation nicht jedesmal eine entsprechende Aktualisierung der Information in dem gesamten Netz vorgenommen werden.

In vorteilhafter Weise müssen die einzelnen Netzstationen N1 - N9 auch keine Kenntnis über die Fähigkeiten der benachbarten oder weiter entfernten Netzstationen haben. Falls eine der eine Verbindungsanforderungs-Nachricht SA empfangenden Netzstationen N2 nicht in der Lage ist, einen entsprechenden Dienst anzubieten oder diese empfangene Verbindungsanforderungs-Nachricht SA entsprechend weiter zu verarbeiten, so führt dies zu dem Abbruch der Routensuche in dem entsprechenden Zweig V2 und entsprechend zu der später nicht weiter durchgeführten Berücksichtigung dieser einen Netzstation N2. Insbesondere ist es daher auch unkritisch, wenn eine auf der Route befindliche Netzstation N3, N7, N8 zu einem späteren Zeitpunkt ausfallen sollte oder aus dem Sendebereich auswandern sollte. Lediglich für den direkt betroffenen Bereich der Route ist dann eine erneute Routenfestlegung erforderlich. Die Anwendung ist somit insbesondere in Ad-hoc-Netzen mit einer geringen Mobilität, beispielsweise in mobilen Rechnerumgebungen in Bürogebäuden besonders vorteilhaft einsetzbar.

Durch die Weiterleitung nur erstmals empfangener Nachrichten und das Unterdrücken der Weiterleitung identischer, zu einem späteren Zeitpunkt empfangener Nachrichten kann insbesondere auch eine Schleifenlösung vermieden werden.

Nachfolgend wird ein möglicher Ablauf für den Aufbau einer Kommunikationsverbindung zwischen der ersten Netzstation N1 und der letzten Netzstation N9 beschrieben. Als Quality of Service-Merkmal QoS soll dabei eine Verbindung mit 300 kbps ermöglicht werden. In der Verbindungsanforderungs-Nachricht SA ist in Fig. 2 anstelle dessen der Wert "Q3" eingetragen. Weiterhin wird bei dem nachfolgend beschriebenen Ablauf davon ausgegangen, dass nur die in Fig. 1 dargestellten Verbindungen V2 - V13 existieren bzw. aufbaubar sind. Die maximalen Datenraten, die durch die Verbindungen V2 - V13 ermöglicht werden, sind, wie vorstehend beschrieben 100, 300 bzw. 1.000 kbps, was auch durch die Darstellungsform angedeutet ist.

Zu einem ersten Zeitpunkt sendet die anfordernde erste Netzstation N1/RN eine Verbindungsanforderungs-Nachricht SA mit den Feldern Anforderungs-Identifizierungsnummer "R123", Netzstations-Identifizierungsnummer N-ID "N1" und als Wert für die Dienstegüte QoS "Q3", was für eine Datenrate von 300 kbps stehen soll. Diese Verbindungsanforderungs-Nachricht SA wird von dem direkt benachbarten Netzstationen N2, N3 und N4 empfangen.

Zu einem zweiten Zeitpunkt werden in diesen drei benachbarten Netzstationen N2 - N4 die folgenden Schritte durchgeführt. Da die Netzstation N2 nur eine Verbindung V5 mit einer maximalen Datenrate von 100 kbps zu der benachbarten Netzstation N5 aufbauen könnte, verhält sie sich still, da sie die Dienstegüte-Anforderung nicht erfüllen kann.

Netzstation N3 wird hingegen die Verbindungsanforderungs-Nachricht weiterleiten, und zwar an die ihr direkt benachbarten Netzstationen N1, N4, N5 und N7. Dabei wird das Netzstations-Identifizierungsfeld N-ID auf ihren eigenen Adresswert "N3" aktualisiert. Die weiteren Felder der Verbindungsanforderungs-Nachricht SA werden beim Weiterleiten nicht verändert.

Die Netzstation N4 leitet die empfangene Verbindungsanforderungs-Nachricht SA nach dem Einsetzen ihrer Netzstations-Identifizierungsnummer N-ID "N4" anstelle des vorherigen Wertes an die ihr benachbarten Netzstationen N1, N3, N6 und N7 weiter.

Zu einem dritten Zeitpunkt ist ein komplexeres Geschehen zu betrachten. Zuerst werden die Weiterverarbeitungen der Verbindungsanforderungs-Nachrichten SA betrachtet, die von der dritten Netzstation N3 zum zweiten Zeitpunkt weitergeleitet wurden.

Die erste Netzstation N1 wird die von der dritten Netzstation N3 empfangene Verbindungsanforderungs-Nachricht SA ignorieren, da die ursprünglichste Verbindungsanforderungs-Nachricht SA mit der Anforderungs-Identifizierungsnummer "R123" von ihr selbst stammte. Jedoch kann dieser Empfang der zurückgesendeten Verbindungsanforderungs-Nachricht SA alternativ auch als Empfangsbestätigung verarbeitet werden, um zu registrieren, dass die dritte Netzstation N3 die ursprüngliche Verbindungsanforderungs-Nachricht SA empfangen hat. Zur Reduzierung des allgemeinen Verkehrs hätte jedoch auch die dritte Netzstation N3 bereits bei einer Übertragung über direkte Kommunikationsverbindungen anstelle der Übertragung über einen Kanal für allgemeine Zugriffe von einer entsprechenden Rückübertragung absehen können.

Die fünfte Netzstation N5 wird die empfangene, weitergeleitete Verbindungsanforderungs-Nachricht SA ebenfalls nicht weiter berücksichtigen, da sie für die weitere Verbindung V5 zu der zweiten Netzstation N2 keine Verbindung mit einer Datenrate von 300 kbps bereitstellen kann.

Die vierte Netzstation N4 wird die Verbindungsanforderungs-Nachricht SA ebenfalls ignorieren, da sie bereits zu einem früheren Zeitpunkt eine Verbindungsanforderungs-Nachricht SA mit der gleichen Anforderungs-Identifizierungsnummer "R123" von der ersten Netzstation N1 empfangen hatte.

Die siebte Netzstation N7 wird hingegen eine Verbindungsanforderungs-Nachricht SA neu erzeugen bzw. weiterleiten, nachdem sie die Netzstations-Identifizierungsnummer N-ID in der Verbindungsanforderungs-Nachricht SA auf ihren eigenen Wert "N7" geändert hat. Die Aussendung wird wiederum im Falle eines Kanals für allgemeinen Zugriff zu einem späteren Zeitpunkt von den Netzstationen N3, N4, N6 und N8 empfangen, im Fall einer Weiterleitung über direkte Kommunikationsverbindungen jedoch vorzugsweise nur an bestimmte der Nachbarstationen N8, N6 weitergesendet.

Die von der vierten Netzstation N4 stammenden, weitergeleiteten Verbindungsanforderungs-Nachrichten SA werden in den einzelnen Nachbarstationen behandelt wie folgt.

In der ersten Netzstation N1 wird die empfangene bzw. zurückgesendete Verbindungsanforderungs-Nachricht SA wiederum ignoriert oder als Empfangsbestätigung, hier von der vierten Netzstation N4 behandelt.

Die dritte Netzstation N3 wird die Verbindungsanforderungs-Nachricht SA ebenfalls ignorieren, da sie bereits zu einem früheren Zeitpunkt eine Verbindungsanforderungs-Nachricht SA mit der gleichen Anforderungs-Identifizierungsnummer "R123" von der ersten Netzstation N1 empfangen hat.

Die siebte Netzstation N7 wird die empfangene, weitergeleitete Verbindungsanforderungs-Nachricht SA ebenfalls ignorieren, da sie bereits früher eine gleiche Verbindungsanforderungs-Nachricht SA mit der gleichen Anforderungs-Identifizierungsnummer "R123" von der dritten Netzstation N3 empfangen und weitergeleitet hat. Dabei wird angenommen, dass die Übertragung von der dritten Netzstation N3 schneller als die Übertragung von der vierten Netzstation N4 erfolgt war.

Die sechste Netzstation N6 wird eine Verbindungsanforderungs-Nachricht SA nach dem Aktualisieren des Netzstations-Identifizierungsnummer-Feldes auf ihre eigene Nummer N6 erzeugen und weiterleiten.

Die sechste Netzstation N6 wird vorzugsweise nicht reagieren, da sie im vorliegenden Fall zeitgleich von beiden mit ihr kommunikationsfähigen benachbarten Netzstationen N4, N7 die Verbindungsanforderungs-Nachricht SA mit der gleichen Anforderungs-Identifizierungsnummer "R123" empfangen hat. Andernfalls könnte sie das Netzstations-Identifizierungsnummer-Feld aktualisieren und eine Weiterleitung vornehmen.

Zu einem vierten Zeitpunkt empfängt die achte Netzstation N8 die Verbindungsanforderungs-Nachricht SA und leitet diese nach der Aktualisierung des Feldes für die Netzstations-Identifizierungsnummer auf ihren eigenen Wert "N8" an die neunte Netzstation N9 weiter. Die neunte Netzstation N9 erkennt anhand der Dienste- bzw. Verbindungs-Identifizierungsnummer S1, dass sie geeignet ist, auf die Verbindungsanforderungs-Nachricht zu antworten und eine entsprechende Kommunikationsverbindung aufbauen zu lassen.

Zu den nächsten Zeitpunkten erzeugt die neunte, angeforderte Netzstation N9/PN eine Verbindungsanforderungs-Antwortnachricht SR und sendet diese über die zukünftige Route, d.h. die Verbindungen V9, V8, V7, V3 bzw. die Netzstationen N8, N7, N3 zu der anfordernden ersten Netzstation N1/RN zurück. Das Weiter- bzw. Zurückleiten wird dabei von den einzelnen Relais-Netzstationen N8, N7, N3 anhand deren zuvor abgespeicherten Daten zu dem Empfangen und Weiterleiten der Verbindungsanforderungs-Nachricht SA durchgeführt.

Sobald die erste Netzstation N1 die Verbindungsanforderungs-Antwortnachricht SR empfangen hat, kann sie die Reservierung von Ressourcen auf dieser eingerichteten Route veranlassen, sofern dies nicht bereits in Verbindung mit dem Rücksenden der Verbindungsanforderungs-Antwortnachricht SR geschehen ist, und mit der Übertragung von Nutzdaten beginnen.

Bei der Auswahl einer Route können verschiedene Kriterien berücksichtigt werden. So könnte beispielsweise die siebte Netzstation N7 für den Fall einer schlechten Verbindung V7 zu der dritten Netzstation N3 eine andere Verbindung V12 zum Aufbau der Route verwenden, wenn diese aufgrund der in der siebten Netzstation N7 abgespeicherten Parameter von früheren Empfängen der Verbindungsanforderungs-Nachrichten SA geeigneter erscheint. Dabei können insbesondere auch Faktoren wie die mögliche Dienstegüte oder die Anzahl von Sprüngen No.-Hops berücksichtigt werden.

Besonders vorteilhaft ist die Möglichkeit einer Aktualisierung einer Route beim Ausfall von einer Netzstation durch die direkt benachbarten Netzstationen. Diese können dann entweder in ihrem Speicher M3 nachsehen, ob eine alternative Verbindungsmöglichkeit besteht, die bei der Auswahl der ursprünglichen Route nicht bevorzugt wurde, oder können eine erneute Route für das fehlende Teilstück der Route suchen, in dem die ursprüngliche Verbindungsanforderungs-Nachricht SA erneut ausgesenden. Sobald die entsprechende Netzstation auf der anderen Seite der Unterbrechung eine entsprechende Verbindungsanforderungs-Nachricht SA empfängt, kann zwischen diesen beiden Netzstationen ein Schließen der Unterbrechung und somit ein Rekonstruieren einer neuen Route veranlasst werden. In vorteilhafter Weise muss entsprechend nicht die gesamte Route zwischen der anfordernden ersten Netzstation N1 und der anbietenden letzten Netzstation N9 rekonstruiert oder gänzlich neu erstellt werden. Zweckmäßiger Weise könnte mit dem erneuten Aussenden einer Verbindungsanforderungs-Nachricht SA auch ein weiteres Identifizierungskennzeichen übermittelt werden, um den empfangenden Netzstationen zu signalisieren, dass die ursprüngliche Route für zumindest einen Teilabschnitt neu zu erstellen ist.

Insbesondere für solche Zwecke der Rekonstruktion einer Route kann es auch sinnvoll sein, in Speicher M3 eine Information über die Verwendung "Use?=J/N" bereit zu stellen, so dass momentan nicht benutzte mögliche Routen mit einem negativen Wert "N" besetzt werden, während die Verbindungen für die bevorzugte Route mit einem positiven Wert "J" besetzt werden.

## Patentansprüche

1. Verfahren zum Bestimmen und Einrichten einer Route zwischen einer anfordernden/anbietenden ersten Netzstation (N1) und einer erwidernden letzten Netzstation (N9) in einem Ad-hoc-Netz mit zumindest zwei, vorzugsweise einer Vielzahl von Netzstationen (N1 - N9), wobei die anfordernde bzw. anbietende erste Netzstation (N1) eine entsprechende Information (SA) zu benachbarten Netzstationen (N2 - N4) aussendet und die benachbarten Netzstationen (N2 - N4) diese Information weiterleiten,
**dadurch gekennzeichnet, dass**
das Routing von Netzstation zu Netzstation erfolgt, wobei jede Netzstation (N1 - N9) die Information als eigene Information (SA) an weitere ihr benachbarte Netzstationen weitersendet und diesbezügliche Daten (R-ID, S-ID, N-ID, QoS, Sendezeit, No.-Hops) der empfangenen und der weitergeleiteten Information (SA) für später eintreffende Informationen oder Datenpakete abspeichert.

2. Verfahren nach Anspruch 1, bei dem
die Information (SA) über eine besondere Fähigkeit der ursprünglich sendenden bzw. die Weiterleitungsfähigkeit zu einer Netzstation mit einer besonderen Fähigkeit informiert.

3. Verfahren nach Anspruch 1 oder 2, bei dem
die Information (SA) eine Bedarfsinformation für einen Zugriff auf eine besondere Funktionalität, einen besonderen Dienst oder eine Kommunikation mit einer bestimmten anderen Netzstation (N9) enthält.

4. Verfahren nach einem vorstehenden Anspruch, bei dem
die erwidernde Netzstation (N9) als Information eine Bereitschaftsinformation (SR) an die anfordernde bzw. bereitstellende Netzstation N1 zurücksendet.

5. Verfahren nach einem vorstehenden Anspruch, bei dem zusammen mit der Information (SA, SR) eine Angabe über die Anzahl erforderlicher Sprünge (No.-Hops) übertragen wird.

6. Verfahren nach einem vorstehenden Anspruch, bei dem zusammen mit der Information oder Bereitschaftsinformation weitere routing-relevante Informationen hinsichtlich möglicher Dienstegüten (QoS) und Sendezeiten oder Verfallszeiten übertragen werden.

7. Verfahren nach einem vorstehenden Anspruch, bei dem zusammen mit der Information bzw. Bereitschaftsinformation jeweils die Netzstations-Identifizierungsnummer (N-ID) der zuletzt weiterleitenden bzw. sendenden Netzstation (N1 - N9) übermittelt wird.

8. Verfahren nach einem vorstehenden Anspruch, bei dem
jede Information (SA, SR) eine individuelle Informations-Identifizierungsnummer (R-ID) zugewiesen bekommt, die zur Identifizierung der Information innerhalb der Netzstationen (N1 - N9) bei wiederholtem Empfang einer Information bzw. einer Bereitschaftsinformation oder von Datenpaketen mit gleicher Informations-Identifizierungsnummer (R-ID) bei deren Routing oder für eine Entscheidung zur Nicht-Weiterleitung verwendet wird.

9. Netzstation (N1 - N9) in einem Ad-hoc-Netz mit
- einer Sende-/Empfangseinrichtung zum Senden und Empfangen von Daten, Signalisierungen bzw. Informationen über eine Funkschnittstelle (V2 - V13) zu benachbarten Netzstationen,
- einer Speichereinrichtung zum Speichern betriebsrelevanter Daten und Informationen und
- einer Steuereinrichtung zum Betreiben der Netzstation und der Kommunikation mit anderen Netzstationen,
**dadurch gekennzeichnet, dass**
- in dem Speicher oder einem weiteren Speicher (M3) Daten zu empfangenen und weitergeleiteten bzw. ausgesendeten Verbindungsanforderungen bzw. Verbindungsangeboten (SA) sowie Verbindungsanforderungs-Antworten (SR) zum Aufbauen und Verwalten von Routen zwischen einer ersten der Netzstationen (N1) und einer letzten der Netzstationen (N9) in einer Route (V3, V7, V8, V9) abgespeichert werden.

10. Netzstation nach Anspruch 9, bei der
in dem Speicher (N3) zum Routen ein Speicherraum für ausschließlich Informationen über direkt benachbarte Netzstationen bereit gestellt ist.
